# EUROPÄISCHE PATENTANMELDUNG

(11) **EP 1 273 407 A1**
(43) Veröffentlichungstag der Anmeldung: **08.01.2003**
(21) Anmeldenummer: 02014134.7
(22) Anmeldetag: 25.06.2002
(51) Int. Cl.: B28B 7/00

(54) **Magnetsetzroboter**

(30) Priorität: 05.07.2001 AT 10432001
(71) Anmelder: EBAWE Anlagentechnik GmbH, 04838 Eilenburg (DE)
(72) Erfinder: Nussbaumer, Erich, 39010 Nals (IT)
(74) Vertreter: Torggler, Paul Norbert, Dr.

(57) **Zusammenfassung**

Magnetsetzroboter zum räumlich positionierten Absetzen und/oder Aufnehmen von Magneten (10) - insbesondere von Permanentmagneten zur Anordnung von Schalungen bei der Fertigbetonteilherstellung -, wobei der Magnetsetzroboter mindestens eine zumindest bereichsweise magnetische, oder zumindest bereichsweise magnetisierbare Halteeinrichtung (1) aufweist, mit der Magnete (10) aufnehmbar und/oder - vorzugsweise an einer anderen Stelle - absetzbar sind.

## Beschreibung

Die vorliegende Erfindung betrifft einen Magnetsetzroboter zum räumlich positionierten Absetzen und/oder Aufnehmen von Magneten, insbesondere von Permanentmagneten zur Anordnung von Schalungen bei der Fertigbetonteilherstellung.

Magnetsetzroboter sind beim Stand der Technik bekannt. Sie werden unter anderem bei der Herstellung von Fertigbetonteilen zum Setzen von Magneten auf Formböden verwendet. Hier dienen die Magnete dazu, die auf die Schalflächen von Formböden aufzusetzenden Schalungselemente positionsgenau anordnen zu können. Eine gattungsgemäße bzw. zur Gattung ähnliche Einrichtung ist z.B. aus der DE 19651933 C1 bekannt. Hier werden die Schalungselemente von einem Schalungsroboter mit einer Greifeinrichtung, vorzugsweise in Form einer pneumatisch betriebenen Sauggreifeinrichtung, von einer Zuführeinrichtung aufgenommen und anschließend an die jeweils vorgesehene Stelle auf die Schalfläche von Formböden verbracht und dort abgesetzt. Als Alternative hierzu sind beim Stand der Technik auch zangenartige Greifeinrichtungen bekannt.

Der Nachteil der beim Stand der Technik bekannten Magnetsetzroboter besteht im wesentlichen darin, daß die Greifeinrichtung, welche der Aufnahme der Magnete dient, sehr speziell an die Form der handzuhabenden Magnete angepaßt werden muß bzw. bei Sauggreifern sehr glatte und saubere Oberflächen der Magnete vorausgesetzt sind. Die Greifeinrichtung ist daher immer nur für eine gewisse Gattung und Größe von Magneten vorgesehen und nicht flexibel für verschiedene Magnettypen und -formen einsetzbar.

Aufgabe der Erfindung ist es somit einen Magnetsetzroboter zu schaffen, bei dem die genannten Nachteile des Standes der Technik beseitigt sind.

Dies wird erfindungsgemäß dadurch erreicht, daß der Magnetsetzroboter mindestens eine zumindest bereichsweise magnetische oder zumindest bereichsweise magnetisierbare Halteeinrichtung aufweist, mit der Magnete aufnehmbar und/oder - vorzugsweise an einer anderen Stelle - absetzbar sind.

Durch die erfindungsgemäße, Halteeinrichtung können Magneten unabhängig von ihrer Form und Größe gehandhabt werden. Das Handhaben umfaßt hierbei sowohl das positionierte Absetzen und Aufnehmen der Magneten als auch ihr Halten und ihren Transport zwischen verschiedenen Positionen. Neben der Tatsache, daß die Aufnahmeeinrichtung, also die Halteeinrichtung für die Magneten nicht an die Form der Einzelmagneten angepaßt werden muß, hat die erfindungsgemäße Halteeinrichtung noch des weiteren den Vorteil, daß der Magnet schneller und unkomplizierter aufgenommen und abgesetzt werden kann, als dies bei den beim Stand der Technik bekannten Greifeinrichtungen möglich ist. Darüber hinaus muß der Magnet keine vollständig glatte und saubere Oberfläche aufweisen, wie diese bei Sauggreifern nach dem Stand der Technik nötig ist.

Im Sinne einer möglichst schnellen Anordnung von mehreren Magneten sieht eine besonders günstige Ausführungsform vor, daß die Halteeinrichrichtung mehrere vorzugsweise drei, vorzugsweise miteinander verbundene Einzelhalteeinrichtungen aufweist, wobei mit den Einzelhalteeinrichtungen vorzugsweise verschiedene Magnete aufnehmbar und/oder absetzbar sind. Hierdurch wird vermieden, daß der Magnetsetzroboter jeden Magneten einzeln von einer meist außerhalb des eigentlichen Arbeitsgebietes liegenden Magnetsammelstelle holen bzw. zu dieser bringen und zu seiner Absetz- bzw. Aufnahmeposition im Arbeitsgebiet fahren muß. Durch diese Ausbildungsform wird vielmehr gewährleistet, daß der Magnetsetzroboter gleichzeitig mehrere Magneten aufnehmen kann und entsprechend im Arbeitsgebiet nur kürzere Wege fahren muß und damit schneller arbeitet.

Um die Magneten räumlich flexibel an verschiedene Konturen angepaßt absetzen zu können bzw. aufnehmen zu können, sieht eine günstige Variante darüber hinaus vor, daß mindestens eine Einzelhalteeinrichtung und/oder Halteeinrichtung in mindestens einer, vorzugsweise drei, Raumrichtungen schwenkbar ausgebildet ist. Durch die schwenkbare Ausbildung der Halteeinrichtung wird gewährleistet, daß die Magneten jeweils exakt auch an aufwendigeren Konturen angeordnet bzw. von diesen abgenommen werden können.

Eine günstige Variante sieht darüber hinaus vor, daß der Magnetsetzroboter eine Führungseinrichtung aufweist, wobei die Halteeinrichtung an der Führungseinrichtung angeordnet ist und von dieser in mindestens einer, vorzugsweise drei, Raumrichtungen verfahrbar ist. Die Führungseinrichtung dient somit dazu, die Halteeinrichtung räumlich exakt an die für das jeweilige Absetzen oder Aufnehmen von Magneten vorgesehene Stelle zu transportieren. Hierzu sind grundsätzlich verschiedene beim Stand der Technik bekannte Varianten denkbar. Eine mögliche Ausführungsform der Führungseinrichtung besteht in einer Förderbahn, in der die Halteeinrichtung kranartig auf einem Balken angeordnet ist, wobei die Halteeinrichtung entlang dieses horizontal liegenden Balkens verfahrbar ist und der horizontal liegende Balken senkrecht zu seiner Erstreckung ebenfalls horizontal verfahrbar auf einer Führung gelagert ist. Die Bewegung der Halteeinrichtung kann in der dritten, vorzugsweise vertikalen Raumrichtung z.B. durch eine teleskopierbare beim Stand der Technik ebenfalls bekannte Hebe- und Senkeinrichtung oder in einer günstig ausgebildeten Ausführungsform der Halteeinrichtung selbst realisiert sein.

Bezüglich der Halteeinrichtung sehen bevorzugte Ausführungsvarianten vor, daß mindestens eine Halteeinrichtung und/oder Einzelhalteeinrichtung mindestens eine aus ferromagnetischem Material bestehende und/oder permanent magnetische und/oder feldstärkensteuerbar magnetisierbare, vorzugsweise einen Elektromagneten aufweisende, Fläche zur Aufnahme mindestens eines Magneten aufweist. Diese verschiedenen Varianten der Halteeinrichtung reichen somit von einer sehr einfachen Ausführung einer nur aus einem ferromagnetischen Material bestehenden Platte bis hin zu permanentmagnetischen oder feldstärkensteuerbaren elektromagnetisch beeinflußten Flächen. Darüber hinaus sind auch Kombinationen dieser Varianten möglich. So kann z.B. eine zunächst permanentmagnetische Fläche einen elektrisch steuerbaren Elektromagneten aufweisen, wobei das Aufnehmen der Magneten bei entsprechender Polung der Permanentmagnete von alleine geschieht, während das Absetzen der Magneten durch das Anlegen eines magnetischen Gegenfeldes in dem am Permanentmagneten zusätzlich angeordneten Elektromagneten erfolgt.

Eine günstige Variante sieht hierbei wiederum vor, daß mindestens eine Halteeinrichtung und/oder Einzelhalteeinrichtung mindestens eine manuell und/oder automatisch steuerbare Absetzeinrichtung zum Absetzen mindestens eines Magneten aufweist. Hierbei kann wiederum vorgesehen sein, daß die Absetzeinrichtung mindestens einen, vorzugsweise zwei, aus unmagnetisierbarem und unmagnetischem Material bestehende, vorzugsweise pneumatisch ein- oder ausfahrbare(n) Stempel aufweist, wobei durch das Ausfahren mindestens eines Stempels mindestens ein Magnet von der Halteeinrichtung trennbar ist. Hierdurch ist ein sehr exakt positioniertes Absetzen der Magneten möglich. Mit den aus unmagnetisierbarem bzw. unmagnetischem Material bestehenden Stempeln wird die magnetische Haftung zwischen dem abzusetzenden Magneten und der magnetischen oder magnetisierbaren Fläche der Halteeinrichtung oder Einzelhalteeinrichtung durch das Ausfahren des Stempel(s) erreicht, wobei gleichzeitig eine exakte Positionierung der abzusetzenden Magneten erfolgt.

Bei der Steuerung sind grundsätzlich zwei Varianten möglich, wobei zunächst vorgesehen ist, daß der Magnetsetzroboter eine automatische, vorzugsweise CAD und/oder CAM-gesteuerte Steuereinrichtung zur Steuerung von Führungs- und/oder Halteeinrichtung aufweist. Alternativ oder zusätzlich kann jedoch auch vorgesehen sein, daß der Magnetsetzroboter eine Steuereinrichtung zur manuellen Steuerung von Führungs- und/oder Halteeinrichtung aufweist. Vor allem die automatische Steuereinrichtung ist hierbei in den Fällen günstig, in denen in digitaler Form in einem Steuercomputer vorliegende Belegungspläne möglichst schnell und exakt umgesetzt werden sollen. Die manuelle Steuerung hingegen erlaubt ein sehr flexibles Aufnehmen und Absetzen der Magneten.

Günstige Ausführungsvarianten sehen darüber hinaus vor, daß der Magnetsetzroboter eine Plottereinrichtung, vorzugsweise zum Zeichnen von Konturen, aufweist. Die Plottereinrichtung kann hierbei vorrangig vor oder nach dem Magnetsetzen aber auch in Kombination mit dem Magnetsetzen, jede beliebige Kontur auf die Schalfläche eines Formbodens oder auf beliebigen anderen Untergrund plotten. Alternativ kann auch vorgesehen sein, daß der Magnetsetzroboter ein zusätzliches, vorzugsweise an der Halteeinrichtung angeordnetes, Greifsystem aufweist. Durch das zusätzliche Greifsystem kann der erfindungsgemäße Magnetsetzroboter zur Handhabung von nichtmagnetischen Bauteilen wie z.B. Schalungselementen zusätzlich aufgerüstet werden.

Für eine exakte Umsetzung der Planungsvorlagen sieht eine Variante vor, daß der Magnetsetzroboter eine Positioniergenauigkeit bezüglich mindestens eines Magneten von 1 mm, vorzugsweise 0,5 mm, bezüglich mindestens einer Raumrichtung aufweist. Zur schnellen Umsetzung der Schalungsarbeiten ist vorgesehen, daß der Magnetsetzroboter eine maximale Bewegungsgeschwindigkeit bezüglich mindestens eines Magneten von 2,5 m/sec., vorzugsweise von 3 m/sec, bezüglich mindestens einer Raumrichtung aufweist. Hierbei ist wiederum vorgesehen, daß der Magnetsetzroboter mindestens einen Magneten mit einer maximalen Beschleunigung bis zu 2 m/sec², vorzugsweise bis zu 3 m/sec², beschleunigt. Neben der weitgehenden Unabhängigkeit der erfindungsgemäßen Haltevorrichtung von der Form der abzusetzenden bzw. aufzunehmenden Magneten besteht auch eine große Spanne bezüglich der Masse der zu handhabenden Magnete. So ist unter anderem vorgesehen, daß mindestens ein Magnet mit einer Masse bis zu 2 kg, vorzugsweise bis zu 8 kg, vom Magnetsetzroboter aufnehmbar und/oder absetzbar ist. Darüber hinaus ist vorgesehen, daß mindestens ein Magnet (10) mit einer maximalen Kantenlänge von 50 mm, vorzugsweise von 300 mm vom Magnetsetzroboter aufnehmbar und/oder absetzbar sind.

In einer günstigen Weiterbildungsform ist vorgesehen, daß der Magnetsetzroboter mindestens eine zusätzliche, vorzugsweise an der Halteeinrichtung angeordnete, Kippeinrichtung zum Ankippen von Magneten aufweist. Diese zusätzliche Kippeinrichtung ermöglicht es, zum Abnehmen der Magnete von der Schalfläche eines Formbodens mit dem Magnetsetzroboter die Magnete durch das Aufbringen einer seitlich angreifenden, vorzugsweise parallel zur Schalfläche wirkenden, Kraft zunächst zu kippen und anschließend die Magnete von der Schalfläche des Formbodens magnetisch abzunehmen. Diese Variante ist besonders günstig, da durch das Kippen der Magnete auf der Schalfläche die auf magnetischen Kräften ruhende Befestigung zwischen Magnet und Schalfläche deutlich gelockert wird und der Magnet daher von der Halteeinrichtung des Magnetsetzroboters einfacher aufgenommen werden kann. Die Kippeinrichtung kann hierbei in einer einfachen Varianten als vorzugsweise automatisch steuerbarer Ablösehebel ausgebildet sein.

Im Sinne einer zügigen Anlieferung der Magnete zum Magnetsetzroboter ist in einer günstigen Ausführungsvariante vorgesehen, daß eine Magnetsetzroboteranordnung mindestens eine Zu- und/oder Abführeinrichtung für Magnete aufweist, wobei mindestens ein Magnetsetzroboter Magnete von der Zu- und/oder Abführeinrichtung aufnimmt und/oder auf dieser absetzt. Hierbei ist vorgesehen, daß die Zu- und/oder Abführeinrichtung die Magneten in Zahl und Anordnung in der Weise anliefert, daß die Magneten von der Halteeinrichtung schnell und unkompliziert aufgenommen werden können.

Weitere Merkmale und Einzelheiten der vorliegenden Erfindung ergeben sich aus der nachfolgenden Figurenbeschreibung. Dabei zeigt:
- Fig. 1: eine schematische Gesamtübersicht zum erfindungsgemäßen Magnetsetzroboter,
- Fig. 2: eine Ansicht zur erfindungsgemäßen Halteeinrichtung,
- Fig. 3: eine Detailansicht zu einer Einzelhalteeinrichtung und
- Fig. 4: eine schematische Darstellung zur Zu- und/oder Abführeinrichtung für Magnete.

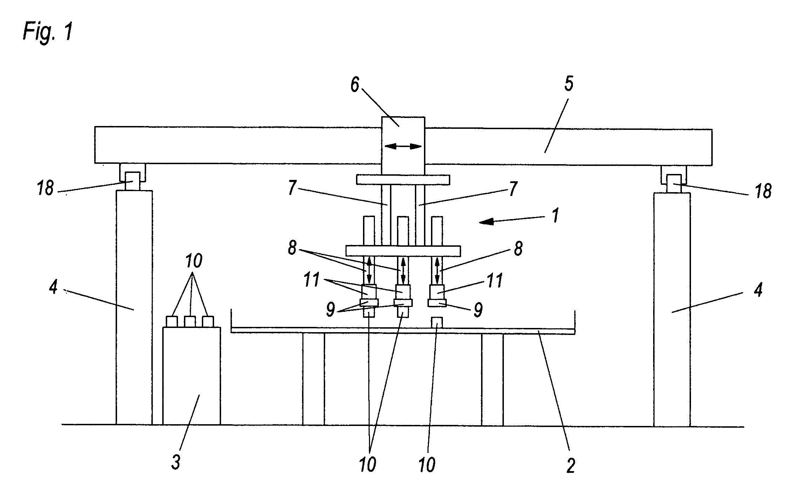

In Fig. 1 ist ein erfindungsgemäßer Magnetsetzroboter dargestellt. Die Halteeinrichtung 1 wird hierbei von einer Führungseinrichtung über einer Schalfläche von Formböden 2 verfahren. Diese Führungseinrichtung besteht aus Stützen 4, auf denen ein Balken 5 mittels Rollen oder Schienen 18 gelagert ist. Der Balken 5 kann hierbei in Richtung der hier nicht dargestellten Projektionsebene horizontal verfahren werden. An dem Balken 5 ist die Halteeinrichtung 1 über eine bewegliche Verbindung 6 in Richtung der Pfeile ebenfalls horizontal verfahrbar angeordnet. Die jeweiligen Antriebe zur Bewegung des Balkens 5 sowie der Halteeinrichtung 1 sind hier nicht dargestellt und entsprechen dem Stand der Technik. Es können z.B. Elektromotoren, welche in Zahnstangen eingreifende Zahnräder antreiben, wie beim Stand der Technik bekannt, verwendet werden. Des weiteren sind auch allgemein bekannte hydraulische oder pneumatische Antriebe denkbar. Als weitere Alternative können auch an sich bekannte, auf dem Markt komplett erhältliche Lineareinheiten als Antrieb eingesetzt werden. Durch die bisher geschilderte Anordnung kann die Halteeinrichtung 1 in einer horizontalen Ebene an jeden beliebigen Punkt über der Schalfläche eines Formbodens 2 verfahren werden. Die Halteeinrichtung 1 weist Hubeinrichtungen 7, welche z.B. als Zahnstangen oder Teleskoparme ausgebildet sein können, auf. Diese halten eine Trägerplatte 15 an der Einzelhalteeinrichtungen 11 mittels ebenfalls teleskopierbaren oder anderweitig vertikal verfahrbaren Einzelarmen 8 befestigt sind. An den jeweiligen Einzelhalteeinrichtungen 11 sind jeweils magnetisierbare oder magnetische Flächen 9 angeordnet. Diese Flächen 9 können aus ferromagnetischen Material, aus Permanentmagneten oder aus mit steuerbaren Elektromagneten versehenen Flächen bestehen.

Die Aufgabe des Magnetsetzroboters besteht darin, Magnete, vorzugsweise Permanentmagnete 10 auf der Schalfläche von Formböden 2 anzuordnen bzw. von dort abzunehmen. Die so angeordneten Magnete 10 dienen bei der Fertigbetonteilherstellung z.B. der Anordnung von hier nicht dargestellten Schalungselementen, sodaß auf der mit Magneten 10 und Schalungselementen fertig bestückten Schalfläche eines Formbodens 2 ein Fertigbetonteil gegossen werden kann.

Die für die Bewegung der einzelnen Komponenten der Halteeinrichtung und der Führungseinrichtung nötigen Antriebe und Motoren sind nicht explizit dargestellt. Sie entsprechen jedoch grundsätzlich den beim Stand der Technik hierzu bekannten Techniken wie z.B. Teleskopantrieben, Linearantrieben oder dergleichen. Ebenso sind zur vereinfachten Darstellung die Stromversorgungen bzw. Energiezuführungen sowie das für die Grundidee der Erfindung nicht weiter relevanten Kleinzubehörteile in Fig. 1 bis 4 nicht dargestellt.

Die Steuerung der Halteeinrichtung 1 sowie der Führungseinrichtung kann per Hand über eine entsprechende hier nicht dargestellte Handsteuerung oder vorzugsweise über eine CAD-CAM-Steuerung automatisch erfolgen. Zusätzlich kann in der Halteeinrichtung 1 eine hier nicht dargestellte beim Stand der Technik bekannte Plottereinrichtung zum Aufbringen von Elementkonturen sowie eine ebenfalls hier nicht dargestellte zusätzliche beim Stand der Technik bekannte Greifeinrichtung zum Halten bzw. Bewegen von nichtmagnetischen Bauteilen wie z.B. Schalungselementen aus Holz vorgesehen sein.

Die in Fig. 1 dargestellte Halteeinrichtung 1 weist drei Einzelhalteeinrichtungen 11 auf, welche jeweils über Einzelarme 8 vertikal verfahrbar sind. Die an den Einzelhalteeinrichtungen 11 angeordneten magnetischen oder magnetisierbaren Flächen 9 dienen als Andock- und Halteeinrichtung für die Magnete vorzugsweise Permanentmagnete 10. Die Magnete 10 werden beim Bestücken einer Schalfläche eines Formbodens 2 von der Zu- und/oder Abführeinrichtung 3 abgeholt und auf der Schalfläche des Formbodens entsprechend der mit dem CAD oder CAM System durchgeführten Planung positionsgenau automatisch oder manuell über die Handsteuerung angeordnet. Hierzu wird die Halteeinrichtung 1 mittels der Führungseinrichtung über die Zu- und/oder Abführeinrichtung 3 verfahren.

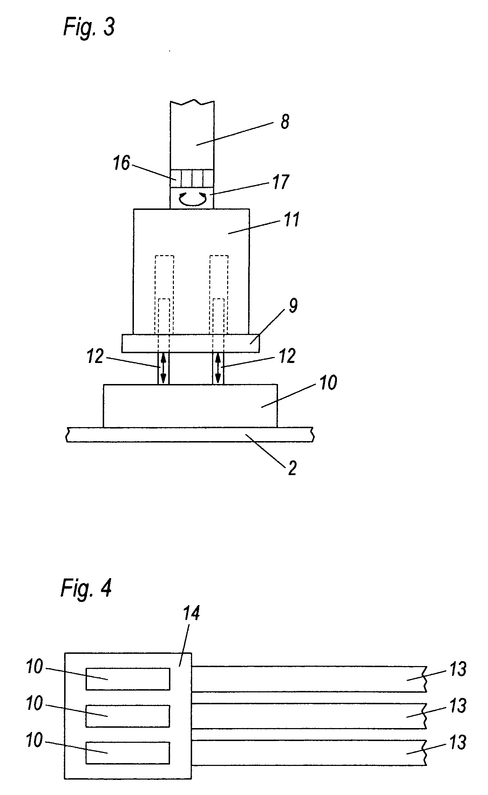

Anschließend werden die Magnete 10 durch Absenken der Einzelhalteeinrichtung 11 bzw. der Hubeinrichtung 7 an den magnetischen bzw. magnetisierbaren Flächen 9 angedockt. Dann wird die Halteeinrichtung 1 vorzugsweise automatisch über die jeweils vorab definierten Positionen über die Schalfläche von Formböden 2 verfahren und die Magnete 10 werden einzeln oder gemeinsam in der in Fig. 3 näher dargestellten Art und Weise positionsgenau auf der Schalfläche des Formbodens 2 abgesetzt. Bei der Aufnahme der Magneten 10 von der Zu- und/oder Abführeinrichtung 3 wird über eine automatische, hier nicht dargestellte, Steuerung überwacht, wieviele Magnete zur Aufnahme positioniert bereit liegen. Die Aufnahme der Magnete oder des Magneten an der Zu- und/oder Abführeinrichtung 3 erfolgt unter Ausnutzung der magnetischen Anziehung.

Die prinzipielle Arbeitsabfolge beim Bestücken der Schalfläche eines Formbodens 2 mit Magneten 10 sieht vor, daß zunächst ein Formboden 2 auf den Roboterplatz (Arbeitsgebiet) verfahren und die Palette formschlüssig am Roboterplatz zentriert wird (durch hier nicht dargestellte Hilfsmittel). Anschließend wird von einem hier nicht dargestellten Leitrechner der Geometriedatensatz für das herzustellende Betonfertigteil auf die automatische Steuereinrichtung (hier ebenfalls nicht dargestellt) des Magnetsetzroboters überspielt. Optional kann nun vorgesehen sein, daß mit dem Magnetsetzroboter und der optionalen Plotterbaugruppe Teilgeometrien auf die Schalfläche des Formbodens 2 geplottet werden. Das Plotten kann zeitlich vor oder nach aber auch gleichzeitig mit dem Magnetsetzprozeß erfolgen. Beim Magnetzprozeß werden die Magnete von der Halteeinrichtung 1, von der Zu- und/oder Abführeinrichtung 3 übernommen und an den vorgegebenen Positionen entsprechend der einzuschalenden Betonelementkonturen abgesetzt. Sobald die Schalfläche des Formbodens 2 fertig bestückt und optional auch beplottet ist, wird die formschlüssige Zentrierung des Formbodens 2 gelöst und der fertig mit Magneten bestückte Formboden 2 zum Taktplatz verfahren. Am Taktplatz erfolgt vorzugsweise das manuelle Aufbringen der weiteren Schalungselemente bzw. Abstellerprofile. Dieser Arbeitsschritt sowie die weiteren Verarbeitungsschritte zur Herstellung von Betonfertigbauteilen entsprechen dem Stand der Technik und sind daher nicht weiter im Detail dargestellt. Das Einsammeln der Magnete 10 kann, wie weiter unten beschrieben, erfolgen.

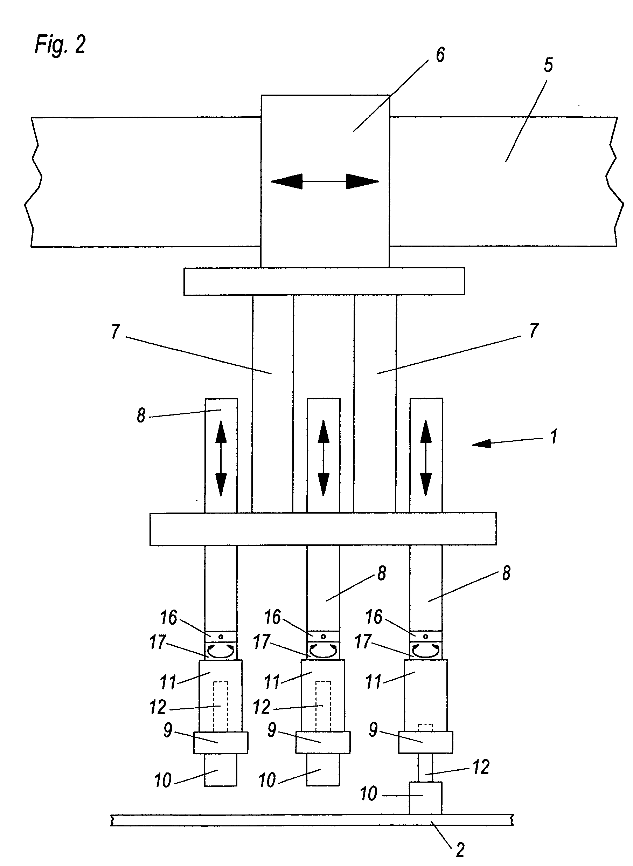

Fig. 2 zeigt eine Detaildarstellung der Halteeinrichtung 1. Hierbei ist darauf hinzuweisen, daß sowohl die Hubeinrichtung 7 als auch die Einzelarme 8 jeweils vertikal verfahrbar bzw. teleskopierbar ausgebildet sein können. Die jeweiligen Antriebe entsprechen wiederum dem Stand der Technik und können z.B. aus pneumatisch- oder öldruckgesteuerten Teleskopzylindern oder aus Elektromotoren mit Zahnstangengetrieben oder aus anderen bekannten Linearantrieben bestehen. An den Einzelarmen 8 sind jeweils die in Fig. 3 in einer Seitenansicht dargestellten Einzelhalteeinrichtungen 11 angeordnet. Diese Einzelhalteeinrichtungen 11 weisen eine magnetische bzw. magnetisierbare Fläche 9 zur Aufnahme der Magneten 10 auf. Diese können in einer einfachen Ausführungsform aus ferromagnetischem Material bestehen, wobei die Haltekraft in dieser Version rein durch den Magneten 10 selbst aufgebracht wird. Einer günstigen Weiterbildung folgend kann die magnetische bzw. magnetisierbare Fläche 9 auch als Permanentmagnet oder als Elektromagnet oder als Kombination von beidem ausgebildet sein. Des weiteren ist es günstig, daß zwischen jedem Einzelarm 8 und jeder Einzelhalteeinrichtung 11 ein Drehgelenk 17 und ein Schwenkgelenk 16 angeordnet ist. Durch diese steuerbaren Gelenke 16 und 17 ist jede Einzelhalteeinrichtung frei im Raum schwenk- und drehbar, sodaß auch komplizierteren Geometrien der Schalfläche eines Formbodens 2 gefolgt werden kann. Zum Absetzen des Magneten 10 auf die Schalfläche des Formbodens 2 ist in Fig. 3 eine günstige Variante dargestellt. Hierzu sind Stempel 12, welche aus unmagnetischem Material bestehen, in der Einzelhalteeinrichtung 11 angeordnet. Diese Stempel 12 sind in der durch die Pfeile angegebenen Richtung ein- bzw. ausfahrbar und dienen dem Trennen der magnetischen Verbindung zwischen der Fläche 9 und dem Magneten 10. Durch das Aufsetzen des Magnete 10 und anschließende Abstreifen mit den Stempeln 12 ist eine sehr exakte Positionierung der Magneten 10 möglich. Alternativ kann auch im Falle, daß die Fläche Elektromagneten (hier nicht dargestellt) aufweist zum Abstoßen eines Magneten 10 von der Fläche 9 ein magnetisches Gegenfeld in der Fläche 9 erzeugt werden. Die entsprechende Steuerung und der Elektromagnet wie auch der Antrieb zum Ein- und Ausfahren der Stempel 12 sind in Fig. 3 nicht dargestellt, entsprechen jedoch dem Stand der Technik.

Soll ein Magnet 10 von der Schalfläche eines Formbodens 2 abgenommen werden, so kann bei kleinen Magneten über einen Elektromagneten in der Fläche 9 ein derart stark anziehendes Magnetfeld erzeugt werden, daß die magnetische Bindung zwischen der vorzugsweise ferromagnetischen Schalfläche des Formbodens 2 und dem Magneten 10 überwunden und der Magnet 10 mit der Fläche 9 angehoben werden und in bereits beschriebener Weise vom Magnetsetzroboter zur Zu- und/oder Abführeinrichtung 3 gebracht werden kann. Zum Abheben von größeren bzw. ein starkes Magnetfeld aufweisenden Magneten ist die Verwendung einer hier nicht weiter dargestellten Kippeinrichtung zum Lösen der Magnete 10 von der Schalfläche eines Formbodens 2 günstig. Mit dieser Kippeinrichtung, die als Ablösehebel ausgebildet sein kann, wird der Magnet angekippt, wodurch die magnetische Anziehung zwischen dem Magneten 10 und der Schalfläche 2 weitgehend überwunden wird und der Magnet einfach von der Fläche 9 der Halteeinrichtung 1 magnetisch aufgenommen werden kann. In einer günstigen Variante ist vorgesehen, daß die Steuerung des Ablösehebels automatisch oder manuell durchgeführt werden kann.

Fig. 4 zeigt eine schematische Darstellung einer günstigen Ausführungsvariante der Zu- und Abführeinrichtung 3 in einer Draufsicht von oben. Hier werden über Rollbahnen 13 die Magnete 10 auf eine vorzugsweise unmagnetische Grundfläche 14 angeliefert. Hierbei ist vorgesehen, daß die Abstände der Rollbahnen 13 den Abständen der Einzelhalteeinrichtungen 11 an der Halteeinrichtung 1 entsprechen, sodaß die Magnete positionsgenau und einfach von der Halteeinrichtung 1 aufgenommen werden können. Beim Aufnehmen bzw. Absetzen der Magnete 10 können sowohl die Magnete einzeln als auch in Gruppen zu je drei Stück gleichzeitig aufgenommen wie auch abgesetzt werden. Durch die rein magnetische Befestigung der Magnete 10 an den Flächen 9 der Halteeinrichtung 1 können die Magnete 10 eine beliebige Form sowie verschiedenste Abmessungen aufweisen. In einer günstigen Variante ist hierbei vorgesehen, daß die Magnete eine maximale Kantenlänge zwischen 50 und 300 mm und eine Masse zwischen 0,2 und 8 kg pro Magnet aufweisen. Grundsätzlich können jedoch beliebige magnetische Schalungskörper mit dem erfindungsgemäßen Magnetsetzroboter gesetzt bzw. transportiert oder aufgenommen oder gehalten werden. Dies können z.B. auch magnetische Leisten oder ganze magnetische Schalungselemente sein.

## Patentansprüche

1. Magnetsetzroboter zum räumlich positionierten Absetzen und/oder Aufnehmen von Magneten - insbesondere von Permanentmagneten zur Anordnung von Schalungen bei der Fertigbetonteilherstellung -, **dadurch gekennzeichnet, daß** der Magnetsetzroboter mindestens eine zumindest bereichsweise magnetische oder zumindest bereichsweise magnetisierbare Halteeinrichtung (1) aufweist, mit der Magnete (10) aufnehmbar und/oder - vorzugsweise an einer anderen Stelle - absetzbar sind.

2. Magnetsetzroboter nach Anspruch 1, **dadurch gekennzeichnet, daß** die Halteeinrichtung (1) mehrere vorzugsweise drei, vorzugsweise miteinander verbundene Einzelhalteeinrichtungen (11) aufweist, wobei mit den Einzelhalteeinrichtungen (11) vorzugsweise verschiedene Magnete (10) aufnehmbar und/oder absetzbar sind.

3. Magnetsetzroboter nach einem der Ansprüche 1 oder 2, **dadurch gekennzeichnet, daß** mindestens eine Einzelhalteeinrichtung (11) und/oder Halteeinrichtung (1) in mindestens einer, vorzugsweise drei, Raumrichtungen schwenkbar ausgebildet ist.

4. Magnetsetzroboter nach einem der Ansprüche 1 bis 3, **dadurch gekennzeichnet, daß** der Magnetsetzroboter eine Führungseinrichtung aufweist, wobei die Halteeinrichtung (1) an der Führungseinrichtung angeordnet ist und von dieser in mindestens einer, vorzugsweise drei, Raumrichtungen verfahrbar ist.

5. Magnetsetzroboter nach einem der Ansprüche 1 bis 4, **dadurch gekennzeichnet, daß** mindestens eine Halteeinrichtung (1) und/oder Einzelhalteeinrichtung (11) mindestens eine aus ferromagnetischem Material bestehende und/oder permanent magnetische und/oder feldstärkensteuerbar magnetisierbare vorzugsweise einen Elektromagneten aufweisende, Fläche (9) zur Aufnahme mindestens eines Magneten (10) aufweist.

6. Magnetsetzroboter nach einem der Ansprüche 1 bis 5, **dadurch gekennzeichnet, daß** mindestens eine Halteeinrichtung (1) und/oder Einzelhalteeinrichtung (11) mindestens eine manuell und/oder automatisch steuerbare Absetzeinrichtung zum Absetzen mindestens eines Magneten aufweist.

7. Magnetsetzroboter nach Anspruch 6, **dadurch gekennzeichnet, daß** die Absetzeinrichtung mindestens einen, vorzugsweise zwei, aus unmagnetisierbarem und unmagnetisiertem Material bestehende, vorzugsweise pneumatisch ein- oder ausfahrbare(n) Stempel (12) aufweist, wobei durch das Ausfahren mindestens eines Stempels (12) mindestens ein Magnet (10) von der Halteeinrichtung (1) trennbar ist.

8. Magnetsetzroboter nach einem der Ansprüche 1 bis 7, **dadurch gekennzeichnet, daß** er eine automatische, vorzugsweise CAD und/oder CAM-gesteuerte Steuereinrichtung zur Steuerung von Führungs- und/oder Halteeinrichtung (1) aufweist.

9. Magnetsetzroboter nach einem der Ansprüche 1 bis 8, **dadurch gekennzeichnet, daß** er eine Steuereinrichtung zur manuellen Steuerung von Führungs- und/oder Halteeinrichtung aufweist.

10. Magnetsetzroboter nach einem der Ansprüche 1 bis 9, **dadurch gekennzeichnet, daß** der Magnetsetzroboter eine Plottereinrichtung, vorzugsweise zum Zeichnen von Konturen, aufweist.

11. Magnetsetzroboter nach einem der Ansprüche 1 bis 10, **dadurch gekennzeichnet, daß** er ein zusätzliches, vorzugsweise an der Halteeinrichtung angeordnetes, Greifsystem aufweist.

12. Magnetsetzroboter nach einem der Ansprüche 1 bis 11, **dadurch gekennzeichnet, daß** er mindestens eine zusätzliche, vorzugsweise an der Halteeinrichtung angeordnete, Kippeinrichtung zum Ankippen von Magneten (10) aufweist.

13. Magnetsetzroboteranordnung mit mindestens einem Magnetsetzroboter nach einem der Ansprüche 1 bis 12, **dadurch gekennzeichnet, daß** sie mindestens eine Zu- und/oder Abführeinrichtung (3) für Magneten (10) aufweist, wobei mindestens eine Halteeinrichtung (1) Magnete (10) von der Zu- und/oder Abführeinrichtung (3) aufnimmt und/oder auf dieser absetzt.
